# FASCICULE DE BREVET EUROPEEN

(11) **EP 1 790 524 B1**
(45) Date de publication et mention de la délivrance du brevet: **23.07.2008**
(21) Numéro de dépôt: 05025553.8
(22) Date de dépôt: 23.11.2005
(51) Int. Cl.: B60N 2/42

(54) **Siège de véhicule automobile apte à absorber l'énergie d'un choc latéral contre le véhicule**
Kraftfahrzeugsitz geeignet zum Absorbieren der Energie eines Seitenaufpralls gegen das Kraftfahrzeug
Motor vehicle seat for absorbing energy of a side impact against a vehicle

(43) Date de publication de la demande: 30.05.2007
(73) Titulaire: Heuliez, 79140 Cerizay (FR)
(72) Inventeur: Leclerre, Frédéric, 91300 Massy (FR); Queveau, Gérard, 79140 Le Pin (FR); Queveau, Paul, 79140 Montravers (FR)
(74) Mandataire: Bredema

(56) Documents cités:
- DE-A1- 3 607 855
- DE-A1- 10 143 881
- DE-A1- 19 540 399
- US-A- 4 512 604

## Description

L'invention concerne un siège de véhicule automobile permettant d'améliorer l'absorption de l'énergie d'un choc latéral contre le véhicule.

Un tel est connu de DE 3607855 A1, qui est considéré comme l'art antérieur le plus proche et décrit les charactéristiques de la préambule de la revendication 1.

En cas de choc latéral sur un véhicule automobile, notamment en regard d'un siège du véhicule, l'énergie du choc se répercute sur le siège et son occupant peut subir en retour un choc contre la paroi latérale du véhicule et éventuellement heurter cette paroi. Le choc de l'occupant contre la paroi peut être violent et donc dangereux pour l'occupant du siège.

Il est connu des dispositifs de protection de l'occupant en cas de choc latéral. Par exemple, on peut prévoir un dispositif de coussin gonflable disposé dans le côté latéral du dossier du siège et se gonflant sous l'effet d'un choc latéral de sorte à s'interposer entre l'occupant du siège et la partie latéral du véhicule. L'occupant subit donc toujours un choc contre la paroi latérale, mais le choc se fait sur le coussin gonflable. L'occupant ne heurte donc pas la paroi, mais le choc contre le coussin gonflable reste violent et peut également être dangereux pour l'occupant susceptible de subir un traumatisme du fait de la force du choc.

En effet, de tels dispositifs de protection ne permettent pas d'absorber l'énergie du choc latéral, ce qui réduirait la force du choc subit par l'occupant du siège et réduirait considérablement la violence des chocs, potentiellement dangereux, du passager sur la paroi du véhicule ou sur le coussin gonflable.

Il existe donc un besoin pour un agencement permettant d'absorber une partie de l'énergie d'un choc latéral contre un véhicule automobile. L'absorption de l'énergie doit être suffisante pour limiter, voir supprimer, le choc subit par le passager lors du choc latéral.

L'invention vise à combler ce besoin en proposant un siège de véhicule automobile dont un pied de support est apte à se déformer en absorbant une partie de l'énergie d'un choc latéral contre le véhicule. Le siège selon l'invention est agencé pour transmettre l'énergie du choc vers ce pied de support afin de réaliser l'absorption de l'énergie.

A cet effet et selon un premier aspect, l'invention concerne un siège pour véhicule automobile comprenant une assise et un dossier, ledit siège comprenant des pieds de support latéraux, respectivement intérieur et extérieur, lesdits pieds étant disposés de part et d'autre de l'assise et étant destinés à être associés au véhicule automobile, ledit siège comprenant en outre une poutre d'association de l'assise aux pieds de support intérieur et extérieur, ladite poutre s'étendant latéralement entre les pieds de support et étant associée à ladite assise et aux dits pieds, la poutre d'association étant agencée pour transmettre l'énergie d'un choc latéral du pied de support latéral extérieur vers le pied de support latéral intérieur et le pied de support intérieur présentant une structure agencée pour se déformer et absorber une partie de l'énergie du choc latéral.

Ainsi, lors d'un choc contre une paroi latérale du véhicule automobile, l'énergie du choc est transmise en partie au pied de support latéral extérieur du siège, la poutre d'association transmet l'énergie du choc du pied extérieur vers le pied intérieur qui se déforme en absorbant une partie de l'énergie. Ainsi, le rebond de l'occupant du siège est fortement limité, ce qui réduit les risques de blessures lors du choc.

Selon un deuxième aspect, l'invention concerne une rangée de sièges de véhicule automobile, comprenant au moins deux sièges tels que décrit ci-dessus, ladite rangée comprenant un pied latéral intérieur disposé entre les deux sièges, ledit pied intérieur formant un pied de support intérieur commun pour lesdits sièges.

Le pied de support intérieur peut donc être associé à deux sièges disposés de part et d'autre de ce pied. Le pied de support intérieur permet ainsi d'absorber l'énergie de chocs latéraux contre le véhicule quelle que soit la paroi latérale contre laquelle le choc se produit. Une telle réalisation permet de simplifier la structure de la rangée en ne nécessitant qu'un seul pied de support intérieur pour deux sièges de véhicule.

D'autres objets et avantages de l'invention apparaîtront au cours de la description qui suit, faite en référence aux dessins annexés dans lesquels :
La figure 1 est une représentation schématique en perspective d'un siège selon l'invention et d'une poutre d'association associée au pied de support latéral intérieur et à un pied de support latéral extérieur appartenant à un deuxième siège d'une rangée de siège.
La figure 2 est une représentation schématique en perspective d'un siège selon l'invention vu de face.
La figure 3 est une représentation schématique d'un siège selon un mode de réalisation, ledit siège étant vu de côté.
La figure 4 est une représentation schématique en coupe de dessus d'un siège selon un autre mode de réalisation.

Dans la description, on définit le terme « longitudinal » par rapport à la direction avant-arrière du véhicule, on définit les termes « latéral », « intérieur » et « extérieur » par rapport à une direction sensiblement horizontale et perpendiculaire à la direction longitudinale. Les termes « sur », « sous », « inférieur » et « supérieur » sont définis par rapport à la direction d'élévation du véhicule.

En référence aux figures, on décrit un siège de véhicule automobile 1 comprenant une assise 2 et un dossier 3.

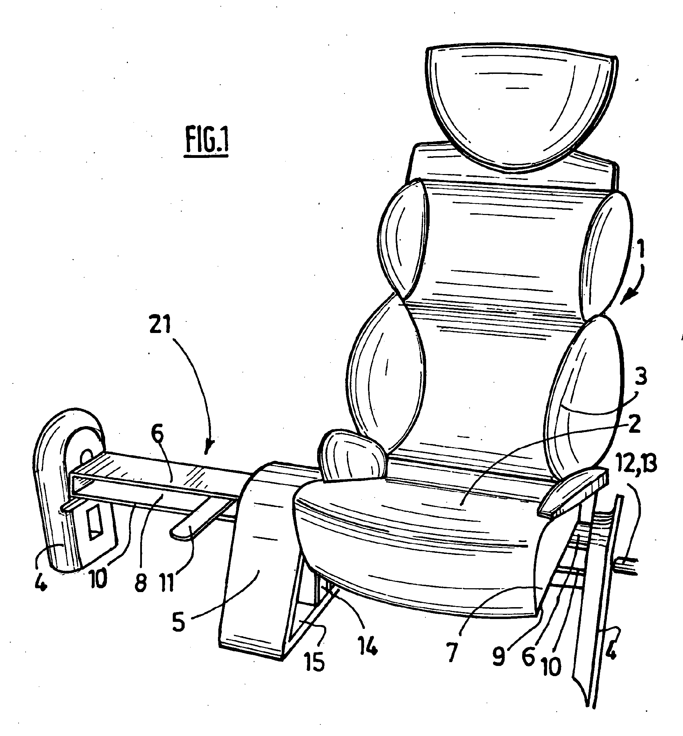

Le siège 1 comprend en outre des pieds de support latéraux du siège, respectivement extérieur 4 et intérieur 5. C'est à dire que le pied de support latéral extérieur 4 est situé sensiblement en regard d'une paroi latérale du véhicule automobile et que le pied latéral intérieur 5 est disposé à l'intérieur de l'habitacle, par exemple entre deux sièges d'une rangée de sièges d'un véhicule automobile. Les pieds de support latéraux 4 et 5 sont disposés latéralement de part et d'autre de l'assise 2. Comme représenté sur les figures 1 à 3, les pieds de support 4 et 5 sont destinés à être associés au plancher du véhicule.

Le siège 1 comprend une poutre d'association 6 de l'assise 2 aux pieds de support 4 et 5. La poutre d'association 6 s'étend latéralement entre les pieds de support 4 et 5 et est associée à l'assise 2 et aux pieds 4 et 5.

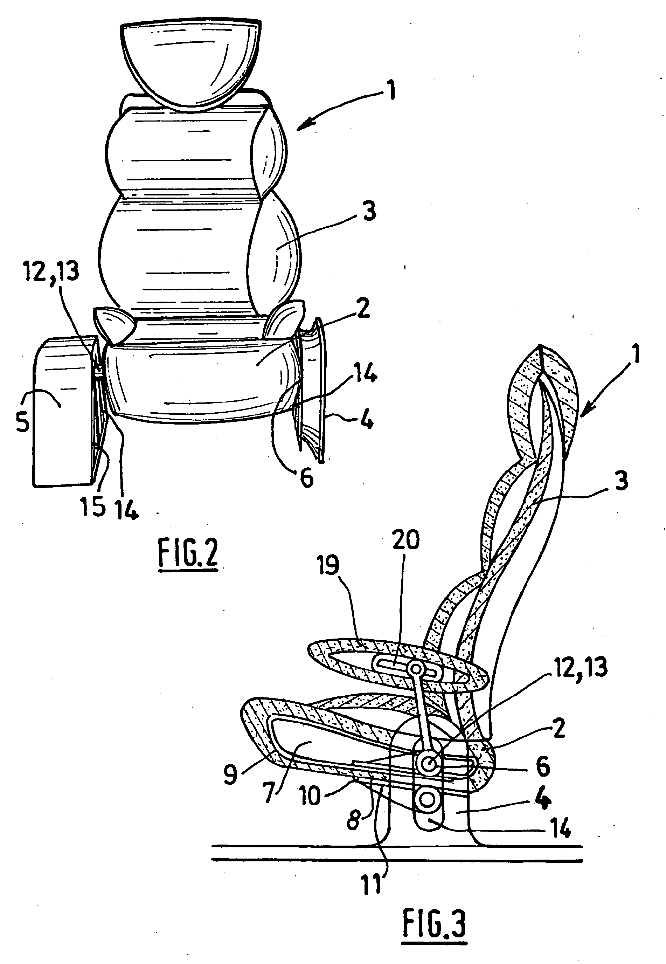

A cet effet et selon une réalisation, la poutre 6 peut être associée à l'assise 2 sous celle-ci, l'assise 2 reposant sur la poutre 6. Selon une autre réalisation représentée sur les figures, l'assise 2 et la poutre 6 comprennent chacune un évidement central 7 et 8, à l'intérieur desquels passent respectivement une partie de la poutre 6 et une partie de l'assise 2. Ainsi, selon cette réalisation et comme représenté sur la figure 3, la partie supérieure de la poutre 6 passe dans l'évidement 7 de l'assise 2 et la partie inférieure 9 de l'assise 2 passe dans l'évidement 8 de la poutre 6, cette partie inférieure 9 reposant sur la partie inférieure 10 de la poutre 6.

La partie inférieure 10 de la poutre 6 peut comprendre au moins un rail de guidage 11 s'étendant sensiblement longitudinalement, comme représenté sur les figures 1 et 3. Le rail de guidage 11 coopère avec des moyens complémentaires (non représentés) prévus sur l'assise, tels qu'un galet prévu pour se déplacer longitudinalement dans le rail 11. Ainsi la position de l'assise 2 est réglable longitudinalement, c'est à dire que l'assise 2 peut être avancée ou reculée par rapport à la poutre 6. Selon la réalisation représentée sur la figure 1, la partie inférieure 10 comprend deux rails de guidage 11 décalés latéralement.

La poutre 6 comprend à ses parties extrêmes latérales des moyens d'association 12 aux pieds de support 4 et 5. Ces moyens d'association 12 sont par exemple formés par des éléments tubulaires 13 s'étendant sensiblement latéralement en saillie par rapport à l'assise 2. Les éléments tubulaires 13 sont associés de façon mobile en translation à des fentes 14 correspondantes prévues dans chacun des pieds de support 4 et 5. Les fentes 14 s'étendent sensiblement perpendiculairement à aux directions longitudinale et latérale de sorte que la hauteur de l'assise 2 est réglable par coulissement des éléments tubulaires 13 dans les fentes 14. Des moyens de blocage du coulissement sont prévus de sorte à fixer la hauteur de l'assise 2 lorsque celle-ci a été réglée.

Le pied de support latéral extérieur 4 est agencé de sorte à présenter une résistance faible à un effort latéral. Ainsi, lorsqu'un effort latéral, tel qu'un choc, est exercé sur le pied extérieur 4, celui-ci transmet latéralement l'énergie de cet effort. Le matériau choisi pour réaliser le pied de support latéral extérieur 4 ainsi qu'une dimension faible selon la direction latérale permettent d'ajuster la résistance faible à un effort latéral.

Le pied de support latéral intérieur 5 présente une forme de caisson, c'est à dire que sa dimension selon la direction latérale est importante. De plus, le pied intérieur 5 présente une structure dont l'enveloppe a une forme sensiblement triangulaire, la base du triangle étant destinée à reposer sur le plancher du véhicule automobile, comme représenté sur les figures 1 et 2. De part et d'autre de la fente 14, des évidements latéraux 15 de forme triangulaire sensiblement symétriques sont réalisés dans cette structure. Les évidements 15 occupent une grande partie de l'intérieur du caisson de sorte à former un pont de matière central s'étendant de la base au sommet du pied de support intérieur 5. Le pont de matière est pourvue de la fente 14. Une telle géométrie est simple et permet de favoriser et de contrôler la déformation du pied de support intérieur 5 lors d'un choc latéral. De plus, le matériau choisi pour réaliser le pied intérieur 5 présente des propriétés d'absorption d'énergie. En choisissant les dimensions des évidements 15, l'épaisseur des parois du pied 5 et la nature du matériau (par exemple acier, aluminium ou magnésium) dans lequel il est réalisé, on peut déterminer les propriétés d'absorption et de déformation voulues du pied intérieur 5. Alternativement ou en complément aux dispositions décrites ci-dessus, il est possible afin d'améliorer encore la capacité d'amortissement de disposer un matériau ou des éléments à structures déformables à l'intérieur des évidements 15 ou de cavités formées à l'intérieur du pied de support latéral intérieur 5.

Ces caractéristiques du pied de support intérieur 5 favorise la déformation de celui-ci et l'absorption d'énergie en cas de choc latéral dont l'énergie est transmise depuis le pied de support latéral extérieur 4 par l'intermédiaire de la poutre 6. A cet effet, la poutre 6 est suffisamment rigide pour transmettre l'énergie du pied extérieur 4 au pied intérieur 5.

Ainsi, en cas de choc latéral, une grande partie de l'énergie due à ce choc est absorbée par le pied latéral intérieur 5.

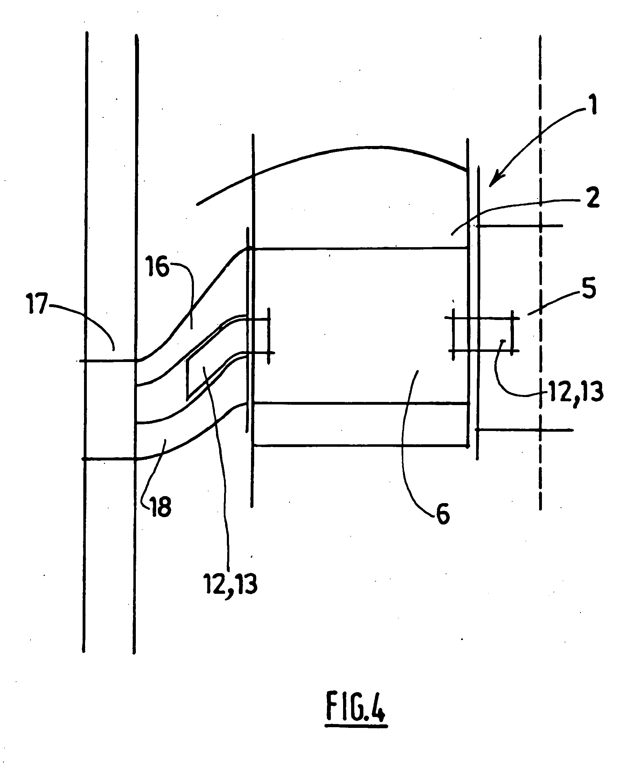

Selon une réalisation représentée sur la figure 4, pour augmenter encore l'absorption d'énergie en cas de choc contre la paroi latéral du véhicule, on prévoit des moyens d'amortissement 16 associés, de préférence liés, aux moyens d'association 12 de la poutre au pied de support latéral extérieur 4. Les moyens d'amortissement 16 sont destinés à s'étendre entre les moyens d'association 12 et une paroi latérale 17 telle qu'un pied latéral du véhicule automobile. Les moyens d'amortissement 16 sont agencés pour permettre l'absorption d'au moins une partie de l'énergie d'un choc latéral contre la paroi latéral 17 avant que cette énergie ne soit transmise au pied de support latéral extérieur 4. A cet effet, les moyens d'amortissement 16 comprennent par exemple un manchon 18 disposé autour de l'élément tubulaire 13 et destiné à s'étendre entre l'élément tubulaire 13 et la paroi latérale 17 du véhicule. Le manchon 18 est agencé pour se déformer en absorbant l'énergie d'un choc latéral contre la paroi latérale 17. Dans le mode de réalisation illustré à la figure 4, l'insertion des moyens d'amortissement 16 entre le pied latéral 17 et la poutre 6 permet d'obtenir une continuité de matière entre le pied milieu et le pied de support latéral intérieur 5. Cette continuité de matière permet de diriger l'énergie d'un choc latéral vers les zones d'absorption, à savoir le manchon 16 et le pied intérieur 5.

Ainsi, la quantité d'énergie transmise au pied de support latéral extérieur 4 est réduite, ce qui permet de répartir la déformation entre les moyens d'amortissement 16 et le pied de support latéral intérieur 5 lors d'un choc, l'énergie à absorber étant alors répartie entre les moyens d'amortissement 16 et le pied de support latéral intérieur 5. Afin de répartir l'énergie entre les moyens d'amortissement 16 et le pied de support latéral intérieur 5 on pourra avantageusement ajuster les capacités d'absorption respective des moyens d'amortissement 16 et du pied de support latéral intérieur 5. Par exemple, si l'on souhaite que la distance entre le siège, donc de l'occupant, et le pied latéral varie peu au cours d'un choc latéral, on pourra choisir un moyen d'amortissement 16 dont la raideur est plus importante que la raideur du pied de support latéral intérieur 5.

Les dispositions décrites ci-dessus permettent de renforcer la rigidité latérale du véhicule. Cette augmentation de la rigidité latérale permet à son tour de réduire et donc d'alléger d'autres parties telles que le plancher où le pavillon dont la contribution en termes de résistance pourra être moindre. La sécurité des occupants du véhicule sera donc améliorée sans augmentation sensible du poids du véhicule.

Selon une réalisation représentée sur la figure 3, le siège comprend au moins un accoudoir 19. L'accoudoir 19 est par exemple articulé à la poutre d'association 6 par l'intermédiaire d'une tige de sorte à permettre le réglage de la position de l'accoudoir 19 par rapport à l'assise 2. On prévoit par exemple de monté la tige en rotation autour des moyens d'association 13 de la poutre 6 aux pieds de support 4 et 5, ainsi l'inclinaison et la hauteur de l'accoudoir 19 par rapport à l'assise 2 peuvent être réglées. De plus l'accoudoir 19 peut être pourvu de moyens de réglage 20 de sa position longitudinale. Ces moyens de réglage 20 comprennent par exemple une fente s'étendant longitudinalement et avec laquelle coopère la tige de l'accoudoir 19, comme représenté sur la figure 3.

On décrit à présent une rangée de sièges 21 comprenant au moins deux sièges 1 tels que décrits ci-dessus. Cette rangée de sièges 21 est représentée sur la figure 1, un des sièges 1 étant représenté sans son assise 2, ni son dossier 3.

Les sièges 1 sont sensiblement alignés selon la direction latérale et la rangée 21 comprend au moins deux pieds de support latéraux extérieur 4 disposés de part et d'autre de la rangée 21 et un pied de support latéral intérieur 5 disposé entre les deux sièges 1. Le pied de support latéral intérieur 5 forme pied de support intérieur 5 pour les deux sièges 1, la poutre 6 de chacun de ces sièges étant associées à ce pied intérieur 5. On réalise ainsi une économie du nombre de pièces et on simplifie la structure de la rangée 21.

## Revendications

1. Siège pour véhicule automobile comprenant une assise (2) et un dossier (3), ledit siège comprenant des pieds de support latéraux, respectivement intérieur (5) et extérieur (4), lesdits pieds étant disposés de part et d'autre de l'assise (2) et étant destinés à être associés au véhicule automobile, ledit siège comprenant en outre une poutre d'association (6) de l'assise (2) aux pieds de support intérieur (5) et extérieur (4), ladite poutre s'étendant latéralement entre les pieds de support (4, 5) et étant associée à ladite assise et aux dits pieds, ledit siège étant **caractérisé en ce que** la poutre d'association (6) est agencée pour transmettre l'énergie d'un choc latéral du pied de support latéral extérieur (4) vers le pied de support latéral intérieur (5) et **en ce que** le pied de support intérieur (5) présente une structure agencée pour se déformer et absorber au moins une partie de l'énergie du choc latéral.

2. Siège selon la revendication 1, **caractérisé en ce que** le pied de support intérieur (5) est réalisé en un matériau présentant des propriétés d'absorption d'énergie.

3. Siège selon la revendication 1 ou 2, **caractérisé en ce que** le pied de support intérieur (5) présente une structure de forme sensiblement triangulaire, la base du triangle étant destinée à reposer sur le plancher du véhicule automobile, la structure présentant des évidements (15) de sorte à pouvoir se déformer sous l'effet d'un choc.

4. Siège selon l'une quelconque des revendications 1 à 3, **caractérisé en ce que** la poutre d'association (6) comprend, à ses parties extrêmes latérales, des moyens d'association (12) aux pieds de support (4, 5).

5. Siège selon la revendication 4, **caractérisé en ce que** les moyens d'association (12) de la poutre (6) comprennent des éléments tubulaires (13), les pieds de support (4, 5) comprenant chacun au moins une fente (14) à l'intérieur de laquelle les éléments tubulaires (13) sont associés de façon mobile en translation de sorte à permettre le réglage en hauteur de l'assise (2) du siège.

6. Siège selon l'une quelconque des revendications à 5, **caractérisé en ce que** la poutre d'association (6) comprend au moins un rail de guidage (11), ledit rail coopérant avec des moyens complémentaires prévus sur l'assise (2), lesdits moyens étant agencés pour permettre le réglage longitudinal de la position de l'assise (2).

7. Siège selon l'une quelconque des revendications 1 à 6, **caractérisé en ce qu'**il comprend au moins un accoudoir (19), ledit accoudoir étant articulé à la poutre d'association (6) de sorte à permettre le réglage de la position de l'accoudoir (19) par rapport à l'assise (2).

8. Siège selon l'une quelconque des revendications 4 à 7, **caractérisé en ce qu'**il comprend en outre des moyens d'amortissement (16), lesdits moyens étant associés, de préférence liés, aux moyens d'association (12) de la poutre (6) au pied de support extérieur (4), lesdits moyens d'amortissement étant destinés à s'étendre entre les moyens d'association (12) et une paroi latérale (17), telle qu'un pied latéral, du véhicule automobile, lesdits moyens d'amortissement étant agencés pour permettre l'absorption d'au moins une partie de l'énergie d'un choc latéral contre ladite paroi latérale.

9. Siège selon la revendication 8 lorsqu'elle dépend de l'une des revendications 5 à 7, **caractérisé en ce que** les moyens d'amortissement (16) comprennent un manchon (18) disposé autour de l'élément tubulaire (13) et destiné à s'étendre entre ledit élément tubulaire et la paroi latérale (17) du véhicule, ledit manchon étant agencé pour se déformer en absorbant l'énergie d'un choc latéral contre la paroi latérale (17).

10. Rangée de sièges de véhicule automobile, **caractérisée en ce qu'**elle comprend au moins deux sièges (1) selon l'une quelconque des revendications 1 à 9, ladite rangée comprenant un pied latéral intérieur (5) disposé entre les deux sièges (1), ledit pied intérieur formant un pied de support intérieur (5) commun pour lesdits sièges.

## Claims

1. A seat for a motor vehicle comprising a seat (2) and a back (3), said seat including respectively internal (5) and external (4) side supporting legs, said legs being positioned on either side of the seat (2) and being intended for linking with the motor vehicle, said seat further including a beam (6) for linking the seat (2) to the internal (5) and external (4) side supporting legs, said beam extending laterally between the supporting legs (4, 5) and being linked to said seat and to said legs, said seat being **characterized in that** the linking beam (6) is so arranged as to transmit the energy of a side impact from the external side supporting leg (4) to the internal side supporting leg (5) and **in that** the external side supporting leg (5) has a structure so arranged as to deform and absorb at least a part of the energy of the side impact.

2. A seat according to claim 1, **characterized in that** the internal supporting leg (5) is made of a material having energy absorption properties.

3. A seat according to claim 1 or 2, **characterized in that** the internal supporting leg (5) has a structure of a substantially triangular shape, the base of the triangle being intended to rest on the floor of the motor vehicle, the structure having recesses (15) so as to be able to deform in case of an impact.

4. A seat according to any one of claims 1 to 3, **characterized in that** the linking beam (6) includes, at the side end parts thereof, means (12) for linking same with the supporting legs (4, 5).

5. A seat according to claim 4, **characterized in that** the beam (6) linking means (12) include tubular elements (13), the supporting legs (4, 5) each including at least one slot (14) inside which the tubular elements (13) are linked, so as to be mobile in translation, so as to enable the adjustment in height of the seat (2).

6. A seat according to any one of claims 1 to 5, **characterized in that** the linking beam (6) includes at least one guiding rail (11), said rail cooperating with matching means provided on the seat (2) said means being so arranged as to enable the longitudinal adjustment of the position of the seat (2).

7. A seat according to any one of claims 1 to 6, **characterized in that** it includes at least one arm-rest (19), said arm-rest being jointed to the linking beam (6) so as to enable the adjustment of the position of the arm-rest (19) with respect to the seat (2).

8. A seat according to any one of claims 4 to 7, **characterized in that** it further includes shock absorption means (16), said means being linked, and preferably connected, to the means (12) for linking the beam (6) with the external supporting leg (4), said shock absorption means (16) being intended to extend between the linking means (12) and a side wall (17), such as a side leg, of the motor vehicle, said shock absorption means (16) being so arranged as to enable the absorption of at least a part of the energy of a side impact against said side wall.

9. A seat according to claim 8, when depending on one of claims 5 to 7, **characterized in that** the shock absorption means (16) include a sleeve (18) positioned around the tubular element (13) and intended to extend between said tubular element and the side wall (17) of the vehicle, said sleeve being so arranged as to deform and absorb the energy of a side impact against the side wall (17).

10. A row of seats for a motor vehicle, **characterized in that** it includes at least two seats (1) according to any one of claims 1 to 9, said row including an internal lateral leg (5) positioned between the two seats (1), said internal leg forming a common internal supporting leg (5) for said seats.

## Patentansprüche

1. Sitz für Kraftfahrzeug mit einer Sitzfläche (2) und einer Rückenlehne (3), wobei der genannte Sitz seitliche Stützfüße, jeweils innen (5) und außen (4) aufweist, wobei die genannten Füße auf beiden Seiten der Sitzfläche (2) angeordnet und dazu bestimmt sind, mit dem Kraftfahrzeug verbunden zu werden, wobei der genannte Sitz ferner einen Verbindungsbalken (6) der Sitzfläche (2) mit dem inneren (5) und äußeren Stützfuß (4) umfasst, wobei sich der genannte Balken seitlich zwischen den Stützfüßen (4, 5) erstreckt und mit der genannten Sitzfläche und den genannten Füßen verbunden ist, wobei der genannte Sitz **dadurch gekennzeichnet ist, dass** der Verbindungsbalken (6) vorgesehen ist, um die Energie eines seitlichen Stoßes vom äußeren seitlichen Stützfuß (4) an den inneren seitlichen Stützfuß (5) zu übertragen, und dass der innere Stützfuß (5) eine Struktur aufweist, die vorgesehen ist, um sich zu verformen und mindestens einen Teil der Energie des seitlichen Stoßes aufzufangen.

2. Sitz gemäß Anspruch 1, **dadurch gekennzeichnet, dass** der innere Stützfuß (5) aus einem Material hergestellt ist, das Energieauffangeigenschaften aufweist.

3. Sitz gemäß Anspruch 1 oder 2, **dadurch gekennzeichnet, dass** der innere Stützfuß (5) eine etwa dreieckige Form aufweist, wobei die Basis des Dreiecks auf dem Fußboden des Kraftfahrzeugs ruhen soll, wobei die Struktur Aussparungen (15) aufweist, um sich unter der Wirkung eines Stoßes verformen zu können.

4. Sitz gemäß einem der Ansprüche 1 bis 3, **dadurch gekennzeichnet, dass** der Verbindungsbalken (6) an seinen seitlichen Endstücken Verbindungsmittel (12) mit den Stützfüßen (4, 5) umfasst.

5. Sitz gemäß Anspruch 4, **dadurch gekennzeichnet, dass** die Verbindungsmittel (12) des Balkens (6) rohrförmige Elemente (13) umfassen, wobei die Stützfüße (4, 5) jeweils mindestens einen Schlitz (14) aufweisen, in dem die rohrförmigen Elemente (13) mobil in Translation verbunden sind, um die Höheneinstellung der Sitzfläche (2) des Sitzes zu ermöglichen.

6. Sitz gemäß einem der Ansprüche 1 bis 5, **dadurch gekennzeichnet, dass** der Verbindungsbalken (6) mindestens eine Führungsschiene (11) umfasst, wobei die genannte Schiene mit komplementären, an der Sitzfläche (2) vorgesehenen Mitteln zusammenwirkt, wobei die genannten Mittel vorgesehen sind, um die Längseinstellung der Position der Sitzfläche (2) zu ermöglichen.

7. Sitz gemäß einem der Ansprüche 1 bis 6, **dadurch gekennzeichnet, dass** er mindestens eine Armlehne (19) umfasst, wobei die genannte Armlehne an dem Verbindungsbalken (6) angelenkt ist, um die Einstellung der Position der Armlehne (19) in Bezug auf die Sitzfläche (2) zu ermöglichen.

8. Sitz gemäß einem der Ansprüche 4 bis 7, **dadurch gekennzeichnet, dass** er ferner Dämpfungsmittel (16) umfasst, wobei die genannten Mittel mit den Verbindungsmitteln (12) des Balkens (6) mit dem äußeren Stützfuß (4) verbunden, vorzugsweise fest verbunden, sind, wobei die Dämpfungsmittel sich zwischen den Verbindungsmitteln (12) und einer Seitenwand (17), wie ein seitlicher Fuß, des Kraftfahrzeugs erstrecken sollen, wobei die Dämpfungsmittel vorgesehen sind, um das Auffangen mindestens eines Teils der Energie eines seitlichen Stoßes gegen die genannte Seitenwand zu ermöglichen.

9. Sitz gemäß Anspruch 8, wenn er von einem der Ansprüche 5 bis 7 abhängig ist, **dadurch gekennzeichnet, dass** die Dämpfungsmittel (16) eine Muffe (18) umfassen, die um das rohrförmige Element (13) herum angeordnet ist und sich zwischen dem genannten rohrförmigen Element und der Seitenwand (17) des Fahrzeugs erstrecken soll, wobei die genannte Muffe vorgesehen ist, um sich beim Auffangen der Energie eines seitlichen Stoßes gegen die Seitenwand (17) zu verformen.

10. Sitzreihe für Kraftfahrzeug, **dadurch gekennzeichnet, dass** sie mindestens zwei Sitze (1) gemäß einem der Ansprüche 1 bis 9 umfasst, wobei die genannte Reihe einen inneren seitlichen Fuß (5) aufweist, der zwischen zwei Sitzen (1) angeordnet ist, wobei der genannte innere Fuß einen gemeinsamen inneren Stützfuß (5) für die genannten Sitze bildet.
